Europäisches Patentamt

European Patent Office

Office européen des brevets

(19)

(11) Numéro de publication : **0 059 496**
**B1**

(12) # FASCICULE DE BREVET EUROPÉEN

(45) Date de publication du fascicule du brevet :
04.07.84

(51) Int. Cl.³ : **H 01 M 10/04, H 01 M 6/02**

(21) Numéro de dépôt : **82200169.9**

(22) Date de dépôt : **15.02.82**

(54) Dispositif électrochimique comportant au moins 2 éléments réunis en série électrique.

(30) Priorité : **27.02.81 FR 8104155**

(43) Date de publication de la demande :
**08.09.82 Bulletin 82/36**

(45) Mention de la délivrance du brevet :
**04.07.84 Bulletin 84/27**

(84) Etats contractants désignés :
**BE CH DE GB IT LI NL SE**

(56) Documents cités :
**DE-C- 191 304**
**DE-C- 730 503**
**FR-A- 655 628**
**GB-A- 206 094**
**US-A- 4 022 951**

(73) Titulaire : **MICHELIN & CIE (Compagnie Générale des Etablissements Michelin) Société dite:**
**4, rue du Terrail**
**F-63000 Clermont-Ferrand (FR)**

(72) Inventeur : **Gérard, François**
**61, rue Viviani**
**F-63100 Clermont-Ferrand (FR)**
Inventeur : **Machat, Jean-Yves**
**11, rue Alexandre Geneix**
**F-63100 Clermont-Ferrand (FR)**

(74) Mandataire : **Doussaint, Jean-Marie et al**
**MICHELIN & CIE Service K. Brevets**
**F-63040 Clermont-Ferrand Cedex (FR)**

EP 0 059 496 B1

**Description**

L'invention concerne les dispositifs électrochimiques. Le terme « dispositif électrochimique » doit être pris dans un sens très large et concerne soit les dispositifs électrochimiques produisant du courant électrique, comme par exemple des piles primaires ou des batteries rechargeables, soit les dispositifs absorbant du courant électrique, par exemple pour produire des éléments ou des composés chimiques par électrolyse.

L'invention concerne plus particulièrement les dispositifs électrochimiques comportant au moins deux éléments, chaque élément comportant des plaques d'électrodes positive(s) et négative(s) les éléments étant en liaison électrique.

La demande de brevet français publiée sous le numéro 2 431 772 décrit des électrodes comportant des barres disposées en éventail pour tenter de répartir le courant sur toute la surface des électrodes.

Les demandes de brevets en Allemagne Fédérale publiées sous les numéros 2 726 562 et 2 744 775 décrivent des plaques de matières actives réunies électriquement deux à deux par un collecteur commun se présentant sous la forme d'une feuille métallique.

Le brevet allemand n° 730 503 décrit une électrode de batterie comportant un cadre en matière plastique délimitant des colonnes de fenêtres dans lesquelles se trouve la matière active. Les fenêtres de chaque colonne sont réunies électriquement par un collecteur commun qui se présente sous la forme d'une tige traversant le cadre.

Les demandes de brevet en Allemagne Fédérale, publiées sous les numéros 2 347 218 et 2 921 687 décrivent des batteries à éléments multiples avec des cadres moulés, les collecteurs des électrodes débordant sur les côtés pour les contacts électriques.

Les dispositifs électrochimiques décrits dans ces documents se caractérisent par un fonctionnement hétérogène des électrodes, ou par une perte électrique par effet Joule importante lorsqu'ils comportent plusieurs éléments.

Le but de l'invention est de supprimer ces inconvénients.

En conséquence, le dispositif électrochimique conforme à l'invention, comportant au moins deux éléments, chaque élément comportant au moins une électrode positive et au moins une électrode négative sous forme de plaques, est tel que :

a) chaque plaque est reliée, sur au moins un côté, à une sortie de courant adjacente, elle-même reliée à un prolongement conducteur d'électrons ;

b) le prolongement correspondant à chaque plaque aboutit par son extrémité dite « libre » à une borne, dite « borne de l'élément » de même polarité que la plaque, ou constitue au moins en partie une telle borne par son extrémité « libre », chaque élément comportant ainsi au moins une borne positive et au moins une borne négative, comme connu de US-A-4 022 951, est caractérisé en ce que :

c) chaque jonction électrique entre chaque plaque et la sortie adjacente s'effectue pratiquement sur tout le côté correspondant de la plaque ;

d) chaque sortie et le prolongement correspondant forment un ensemble situé hors de la plaque ; la distance entre les bords extrêmes de cet ensemble est pratiquement égale à la longueur du côté correspondant de cette plaque, depuis cette plaque jusqu'à l'extrémité « libre » du prolongement correspondant, ces bords extrêmes aboutissant à cette plaque ;

e) les deux éléments sont réunis en série électrique par au moins deux des bornes des éléments ; la jonction électrique entre ces deux bornes s'effectue pratiquement sur toute cette distance entre bords extrêmes pour chaque prolongement qui aboutit à une de ces bornes ou qui constitue au moins en partie, par son extrémité « libre », une de ces bornes.

Les figures toutes schématiques du dessin avec leur description ainsi que les exemples qui suivent sont destinés à illustrer l'invention et à en faciliter la compréhension sans toutefois en limiter la portée.

Sur ce dessin :

la figure 1   représente en perspective un dispositif conforme à l'invention ;

la figure 2   représente en coupe horizontale un autre dispositif conforme à l'invention ;

la figure 3   représente en plan une électrode utilisée dans le dispositif représenté à la figure 2 ;

la figure 4   représente en coupe horizontale un autre dispositif conforme à l'invention ;

la figure 5   représente en coupe horizontale un autre dispositif conforme à l'invention ;

la figure 6   représente en plan une électrode utilisée dans le dispositif représenté à la figure 5 ;

la figure 7   représente en coupe verticale un autre dispositif conforme à l'invention ;

la figure 8   représente en vue éclatée le dispositif représenté à la figure 7, cette vue étant prise selon la flèche $F_8$ de la figure 7 ;

la figure 9   représente, vue de dessus, le dispositif représenté aux figures 7 et 8.

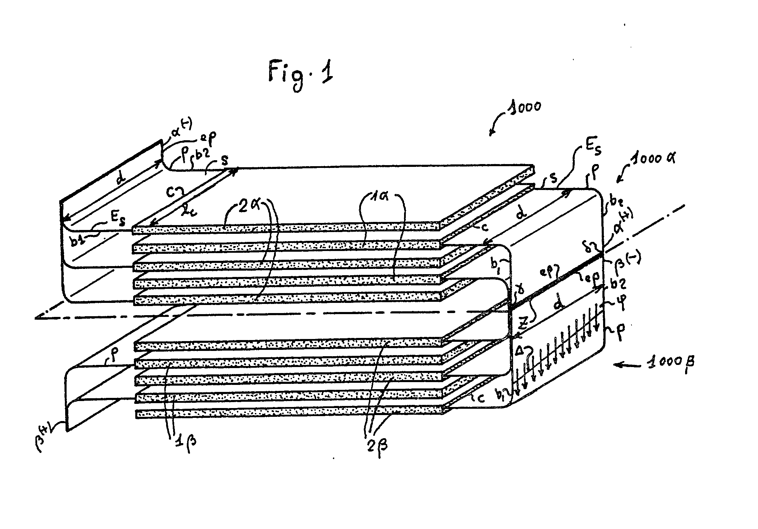

La figure 1 représente un dispositif conforme à l'invention. Ce dispositif 1 000 comporte deux éléments 1 000 α, 1 000 β. L'élément 1 000 α comporte deux électrodes positives 1 α et trois électrodes négatives 2 α. L'élément 1 000 β comporte deux électrodes positives 1 β et trois électrodes négatives 2 β. Ces chiffres ne sont pas limitatifs car les dispositifs conformes à l'invention peuvent comporter plus de deux éléments et chaque élément peut comporter un nombre variable d'électrodes positives et négatives. Les électrodes 1 α, 2 α, 1 β, 2 β se présentent sur la forme de plaques, par exemple sensiblement planes. Chaque plaque est reliée sur un côté « c » à une sortie de courant « s ». Le terme « sortie de courant » désigne dans ce texte une pièce conduisant les électrons qui est reliée électriquement à une électrode, c'est-à-dire à une plaque, de façon à permettre le drainage des entrées et des sorties de charges électriques (c'est-à-dire d'électrons) vers cette électrode, ou en provenance de cette électrode. Chaque sortie de courant « s » est elle-même reliée à un prolongement « p » conduisant les électrons.

Dans un but de simplification, les éléments du dispositif 1 000 qui ne sont pas essentiels à l'exposé de l'invention, par exemple l'électrolyte, le ou les boîtiers des éléments, ne sont pas représentés à la figure 1.

Chaque sortie « s » et son prolongement « p » peuvent être structurellement différents ou au contraire former une pièce unique, par exemple une feuille conductrice. Dans ce dernier cas, la sortie « s » correspond à la portion de la feuille qui se trouve au contact de la plaque, le reste de la feuille correspondant au prolongement « p ». Dans l'élément 1 000 $\alpha$, les prolongements « p » correspondant aux plaques positives 1 $\alpha$ aboutissent à la borne positive $\alpha^{(+)}$ et les prolongements « p » correspondant aux plaques négatives 2 $\alpha$ aboutissent à la borne négative $\alpha^{(-)}$. De façon analogue, dans l'élément 1 000 $\beta$, les prolongements « p » correspondant aux plaques positives 1 $\beta$ aboutissent à la borne positive $\beta^{(+)}$ et les prolongements « p » correspondant aux plaques négatives 2 $\beta$ aboutissent à la borne négative $\beta^{(-)}$.

Le prolongement « p » correspondant à chaque plaque aboutit donc par son extrémité « ep » à une des bornes $\alpha^{(+)}$, $\alpha^{(-)}$, $\beta^{(+)}$, $\beta^{(-)}$, les bornes $\alpha^{(+)}$, $\alpha^{(-)}$ étant les bornes de l'élément 1 000 $\alpha$ et $\beta^{(+)}$, $\beta^{(-)}$ étant les bornes de l'élément 1 000 $\beta$. Chaque prolongement « p » peut aussi éventuellement constituer au moins en partie une telle borne par son extrémité « ep ». Chacune de ces extrémités « ep » est dite « libre » car elle n'est pas reliée à une sortie de courant « s ».

La jonction électrique entre chaque plaque et la sortie « s » adjacente s'effectue pratiquement sur tout le côté « c » correspondant de la plaque.

Chaque sortie « s » et le prolongement « p » correspondant forment un ensemble $E_s$ situé hors de la plaque correspondante. La distance « d » entre les bords extrêmes $b_1$, $b_2$ de cet ensemble $E_s$ est pratiquement égale à la longueur « $l_c$ » du côté « c » correspondant de cette plaque, depuis cette plaque jusqu'à l'extrémité « ep » libre du prolongement « p » correspondant, ces bords extrêmes aboutissant à cette plaque, cette extrémité « ep » aboutissant à une borne ou constituant au moins en partie une borne.

Lorsque le côté « c » de la plaque n'est pas rectiligne, la distance « $l_c$ » est mesurée entre les points extrêmes de ce côté.

La jonction électrique entre chaque sortie « s » et le prolongement « p » adjacent s'effectue pratiquement sur toute la distance « d » correspondante.

Les éléments 1 000 $\alpha$, 1 000 $\beta$ sont réunis en série électrique par les bornes $\alpha^{(+)}$ et $\beta^{(-)}$. La jonction électrique entre ces deux bornes s'effectue pratiquement sur toute la distance « d » entre les bords extrêmes $b_1$, $b_2$ de chaque prolongement qui aboutit à une de ces bornes ou qui constitue au moins en partie, par son extrémité « libre », une de ces bornes. La figure 1 indique à titre d'exemple, en noir, une zone de contact électrique Z relative à la jonction électrique entre un prolongement « p » correspondant à la borne $\alpha^{(+)}$ et un prolongement « p » correspondant à la borne $\beta^{(-)}$. Cette zone Z correspond aussi à la jonction électrique entre deux prolongements « p » successifs, à la borne $\alpha^{(+)}$ d'une part, et à la borne $\beta^{(-)}$ d'autre part. Cette zone Z a été représentée sous la forme d'une bande continue qui s'étend entre ses extrémités $\gamma$, $\delta$ sur toute la distance « d », entre les bords extrêmes $b_1$, $b_2$ de chaque prolongement « p » correspondant, cette bande étant par exemple parallèle aux côtés « c » auxquels elle est reliée. Ce cas n'est en aucune façon limitatif. On peut en effet envisager des zones de jonction Z de forme quelconque, par exemple des zones sensiblement linéaires mais non parallèles aux côtés « c », des zones sous forme de lignes brisées ou curvilignes. Cette zone peut aussi être constituée de plusieurs zones élémentaires de jonction électrique, par exemple constituée de points de soudure, ou d'assemblages par vis et écrous.

Tel est le cas aussi par exemple lorsque les prolongements « p » sont constitués de lamelles sensiblement parallèles et séparées les unes des autres. De telles lamelles seront décrites ultérieurement en détail dans ce texte. Il va de soi que les prolongements « p » peuvent être éventuellement continus de la borne $\alpha^{(+)}$ à la borne $\beta^{(-)}$, ou entre deux plaques d'un même élément. Dans toutes les réalisations précédemment mentionnées, la jonction électrique le long de la zone Z s'effectue sur toute la distance « d » entre les bords extrêmes $b_1$, $b_2$ correspondant aux bornes $\alpha^{(+)}$, $\beta^{(-)}$.

Les avantages procurés par le dispositif 1 000 conforme à l'invention sont les suivants :

L'ensemble $E_s$ constitué par chaque prolongement « p » et la sortie « s » correspondante permet, grâce à la nature des jonctions électriques précédemment décrites, d'obtenir une nappe de courant telle que la densité de courant électrique soit pratiquement uniforme le long d'une droite quelconque de cet ensemble. Une telle droite $\Delta$ est représentée à la figure 1, l'homogénéité de répartition de la densité de courant le long de cette droite $\Delta$ étant schématisée par l'ensemble $\varphi$ de flèches parallèles ayant la même longueur. Cette densité de courant uniforme assure un fonctionnement homogène de toutes les électrodes d'un même élément dans une direction perpendiculaire à la direction d'écoulement des charges, quel que soit l'élément considéré. Cette propriété concourt en particulier à l'amélioration de l'énergie massique et du rendement lorsque le dispositif est un générateur de courant électrique. Cette homogénéité dans la répartition de la densité de courant subsiste même si la longueur des connexions électriques est courte, c'est-à-dire même si la distance séparant chaque borne des plaques correspondantes est courte par rapport à la longueur «$l_c$» des côtés correspondants, le rapport entre cette distance (mesurée le long de l'ensemble $E_s$ correspondant) et la longueur «$l_c$» pouvant ainsi être aussi faible que l'agencement général du dispositif 1 000 l'exige.

La description donnée précédemment pour la ou les zones de jonction électrique aux bornes $\alpha^{(+)}$, $\beta^{(-)}$ peut s'appliquer aux autres bornes $\alpha^{(-)}$, $\beta^{(+)}$.

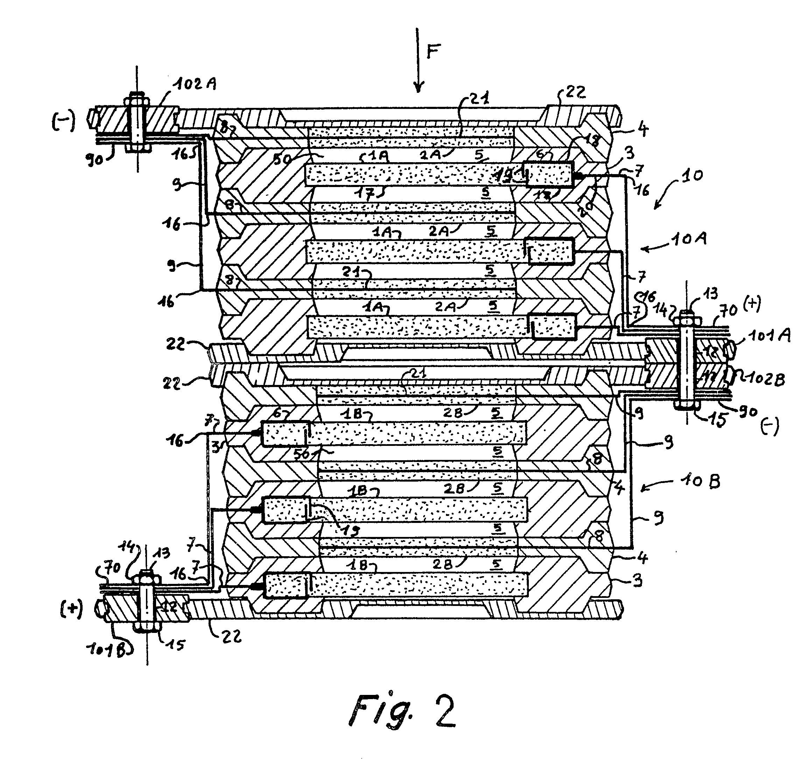

La figure 2 représente un autre dispositif conforme à l'invention, ce dispositif 10 étant par exemple une batterie produisant du courant électrique. Le dispositif 10 comporte deux éléments 10 A et 10 B. L'élément 10 A comporte trois électrodes positives 1 A et trois électrodes négatives 2 A. De façon analogue l'élément 10 B comporte trois électrodes positives 1 B et trois électrodes négatives 2 B. Ces électrodes ont la forme de plaques disposées verticalement. Chaque électrode positive 1 A, 1 B est entourée par un cadre 3 isolant et chaque électrode négative 2 A, 2 B est entourée par un cadre 4 isolant. Dans chaque élément, les plaques sont disposées les unes en face des autres de telle sorte que deux électrodes successives soient de signes opposés. Deux électrodes successives, pour chaque élément, et leurs cadres correspondants définissent une chambre 5 étanche où se trouve un électrolyte 50. Chaque électrode positive 1 A, 1 B est reliée sur un côté à une sortie 6 de courant enchâssée dans le cadre 3 et comportant un prolongement 7 situé hors du cadre 3 et isolé de l'électrolyte 50.

De façon analogue chaque électrode négative 2 A, 2 B est reliée sur un côté à une sortie 8 de courant enchâssée dans le cadre 4 et comportant un prolongement 9 situé hors du cadre 4 et isolé de l'électrolyte 50. Les prolongements 7 et 9 sont par exemple réalisés avec des feuilles de cuivre.

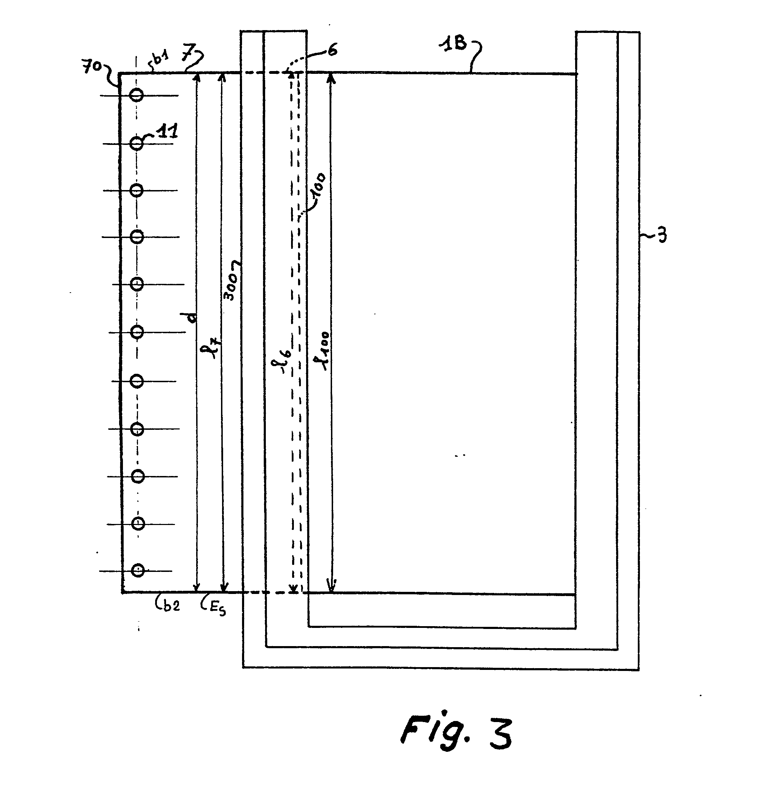

La figure 3 représente avant montage dans le dispositif 10 une électrode positive 1 B ayant la forme d'une plaque rectangulaire. Cette plaque est entourée d'un cadre 3. La sortie 6 et le prolongement 7 correspondant à cette plaque se présentent chacun sous la forme d'une feuille rectangulaire. La longueur $l_6$ de la sortie 6, mesurée le long du côté adjacent vertical 100 de la plaque 1 B et la longueur $l_7$ du prolongement 7, mesurée le long du côté adjacent vertical 300 du cadre 3 (c'est-à-dire le long de la sortie 6) ont pratiquement la même valeur que la longueur $l_{100}$ du côté 100 de la plaque 1 B, $l_{100}$ étant donc la hauteur de l'électrode. Les électrodes 2 B, 1 A, 2 A ont par exemple une disposition analogue. Chaque prolongement 7 correspondant à une électrode positive 1 B comporte une extrémité 70 « libre » non reliée au cadre 3. Cette extrémité comporte des trous 11 sur toute sa longueur, c'est-à-dire sur toute la longueur $l_7$. La figure 3 représente par exemple onze trous 11 pour l'extrémité 70. Les trois extrémités 70 de l'élément 10 B sont réunies électriquement à une pièce allongée conductrice 101 B percée de trous 12. Cette pièce 101 B sert de borne positive pour l'élément 10 B et elle est réalisée par exemple en métal. Les trous 11, 12 se correspondent de telle sorte que les trois extrémités 70 soient reliées électriquement entre elles et à la pièce 101 B grâce à onze vis 13 disposées dans les trous 11, 12, les écrous 14 et les têtes de vis 15 permettant un bon serrage des extrémités 70 et de la pièce 101 B, et par suite de bons contacts électriques. Les extrémités 70 sont disposées d'un même côté de la pièce 101 B, la jonction électrique entre ces extrémités et la pièce 101 B s'effectuant pratiquement sur toute la longueur $l_7$ de ces extrémités. La réunion des extrémités 70 peut s'effectuer en réalisant un ou plusieurs plis 16 sur les feuilles 7 comme représenté à la figure 2.

Il va de soi qu'on peut remplacer éventuellement les vis 13, avec les écrous 14 et les têtes 15, par des soudures et que l'on peut se dispenser d'utiliser la pièce 101 B, la borne positive étant dans ce cas constituée par la réunion même des extrémités 70, de façon par exemple à limiter le poids du dispositif 10.

La borne négative 102 A de l'élément 10 A est réunie électriquement aux extrémités 90 des prolongements 9 de cet élément de façon analogue à ce qui a été décrit pour la borne 101 B. Il en est de même pour la borne 101 A, réunie aux extrémités 70 des prolongements 7 de l'élément 10 A, et pour la borne 102 B réunie aux extrémités 90 de l'élément 10 B, avec la différence que dans ce cas les vis 13 traversent à la fois les pièces 101 A, 102 B et les extrémités 70, 90 de façon à provoquer un serrage de l'ensemble de ces pièces et de ces extrémités avec les écrous 14 et les têtes 15, les pièces 101 A, 102 B étant en contact direct l'une avec l'autre. La jonction électrique entre les bornes 101 A, 102 B s'effectue donc pratiquement sur toute la longueur des extrémités 70, 90 qui aboutissent à ces bornes, cette longueur ayant la même valeur $l_7$. Ici encore les vis 13 avec les têtes 15 et les écrous 14 peuvent être remplacés par des soudures, et les bornes 101 A, 102 B peuvent être constituées par la réunion des extrémités 70 et/ou 90.

Les bornes 101 B, 102 A sont donc les bornes du dispositif 10 dont les éléments 10 A, 10 B sont réunis électriquement en série. Pour un observateur regardant le dispositif 10 selon la flèche F perpendiculaire aux électrodes (figure 2) les bornes 101 B, 102 A sont disposées d'un côté, et les bornes 101 A, 102 B reliées électriquement sont disposées de l'autre côté, les sorties 6, 8 successives et les prolongements 7, 9 successifs étant donc disposés alternativement dans un sens ou dans l'autre.

Dans un but de simplicité le dispositif 10 ne comporte que deux éléments comportant chacun seulement trois électrodes positives et trois électrodes négatives, mais il va de soi que l'invention s'applique quel que soit le nombre d'éléments et d'électrodes.

A titre d'exemple le dispositif 10 est une batterie alcaline du type nickel/fer. les électrodes 1 A, 1 B sont des électrodes positives de nickel et les électrodes 2 A, 2 B sont des électrodes négatives de fer. Chaque électrode positive 1 A, 1 B comporte un feutre 17 de carbone et la sortie 6 correspondant à cette électrode comporte deux plaques 18 de nickel pliées, avec des aspérités 19 qui pénètrent dans le feutre 17, les plaques 18 étant en contact électrique entre elles, par exemple grâce à une soudure. Les plaques 18 sont rendues solidaires du feutre 17 grâce à un dépôt électrolytique (non représenté) adhérant à la fois au feutre 17, et aux plaques 18. Ce dépôt est par exemple du nickel, le feutre 17 ayant été également recouvert de nickel par électrolyse lors de l'assemblage entre les plaques 18 et le feutre 17. Préalablement au montage dans la batterie 10, la matière active (non représentée) a été déposée dans le feutre nickelé 17. Une telle électrode est décrite dans la demande de brevet français n° 79 18549 au nom de la demanderesse. Les plaques 18 comportent une extrémité libre 20 conductrice, constituée par exemple par un côté d'un pli d'une des plaques 18, le prolongement 7 étant constitué par la partie de cette extrémité 20 qui se trouve hors du cadre 3, la sortie 6 et le prolongement 7 formant donc une feuille commune $E_s$, la distance « d » par exemple constante entre les bords extrêmes $b_1$, $b_2$ de cette feuille étant pratiquement égale à $l_{100}$ (Fig. 3).

Chaque électrode négative de fer 2 A, 2 B comporte de façon connue un collecteur de courant 21, par exemple en cuivre, entouré d'une matière active comprenant du fer et/ou un oxyde de fer. Le prolongement 9 est constitué par exemple par la partie du collecteur 21 qui se trouve hors du cadre 4, la sortie 8 étant constituée par la partie du collecteur 21, qui se trouve dans le cadre 4.

L'électrolyte 50 disposé dans les chambres 5 est une solution aqueuse d'hydroxyde de potassium.

Les cadres 3, 4 sont réalisés par exemple en surmoulant une matière plastique sur le pourtour des électrodes de façon à isoler les sorties 6, 8. Cette matière peut être thermoplastique ou thermodurcissable. Chaque pièce 101 A, 102 A, 101 B, 102 B est prolongée par une plaque isolante 22, dite plaque d'extrémité, réalisée par exemple comme les cadres 3, 4 avec une matière plastique. L'ensemble des électrodes de chaque élément 10 A, 10 B est ainsi fixé entre deux plaques 22 de façon à former un ensemble rigide et étanche grâce à une soudure des cadres 3, 4 entre eux ou avec les plaques 22, les électrodes étant disposées par exemple verticalement.

Il va de soi que la batterie 10 peut éventuellement comporter de façon connue des séparateurs ou des espaceurs entre les électrodes.

En plus du fonctionnement homogène des électrodes déjà décrit, la batterie 10 présente les avantages suivants :

1. les parties supérieure et inférieure de la batterie sont dépourvues de sorties de courant et de bornes, puisque celles-ci sont disposées sur les côtés ; l'accès à la partie supérieure du dispositif est donc libre et aisé, ce qui permet en particulier d'introduire facilement l'électrolyte dans les éléments ;

2. les cadres 3, 4 en contact permettent d'isoler de l'électrolyte les prolongements 7, 9 et de régler à volonté l'épaisseur de la veine d'électrolyte dans les chambres 5 car il suffit de régler l'épaisseur des cadres en conséquence ;

3. les éléments sont facilement interchangeables dans le dispositif ; il est donc facile d'en remplacer un, ou d'en modifier le nombre pour faire varier par exemple la tension aux bornes du dispositif.

Bref le dispositif 10 se caractérise par un montage ou démontage facile, par une faible perte de puissance par effet Joule, par un isolement chimique total des connexions électriques entre électrodes, ou entre éléments, vis-à-vis de l'électrolyte.

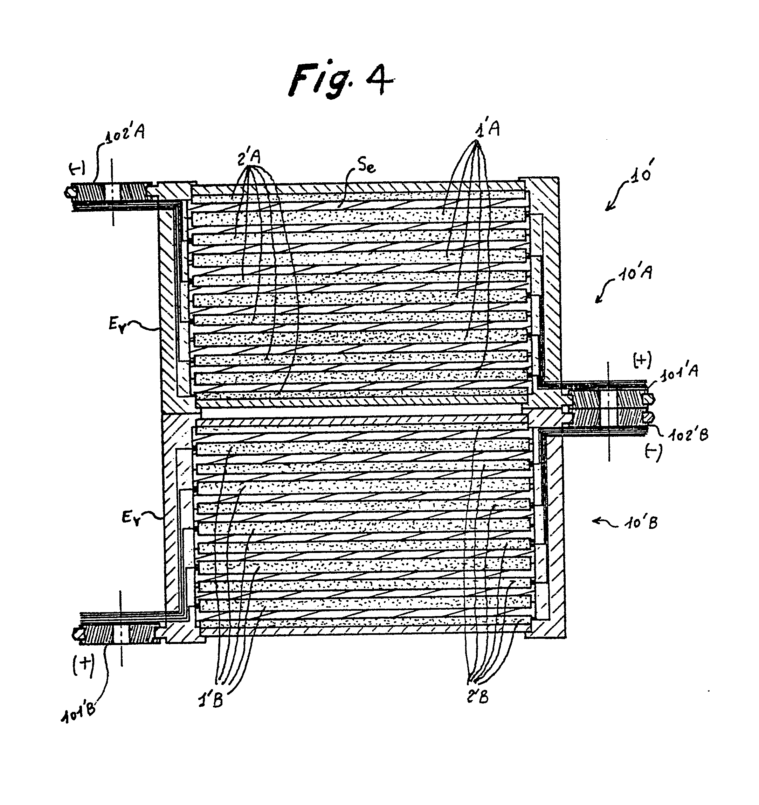

La figure 4 représente un autre dispositif conforme à l'invention. Ce dispositif 10' comporte deux éléments 10'A, 10'B. L'élément 10'A comporte cinq électrodes positives 1'A et six électrodes négatives 2'A. De façon analogue, l'élément 10'B comporte cinq électrodes positives 1'B et six électrodes négatives 2'B. Dans chaque élément deux électrodes successives ont des signes opposés et sont séparées par un séparateur $S_e$. L'élément 10'A comporte la borne positive 101'A et la borne négative 102'A.

L'élément 10'B comporte la borne positive 101'B et la borne négative 102'B. Les éléments 10'A, 10'B sont reliés en série électrique par les bornes 101'A, 102'B, les bornes 101'B et 102'A étant les bornes du générateur 10'. L'agencement général du dispositif 10' est analogue à celui du dispositif 10 précédemment décrit, avec la différence que dans le dispositif 10' les électrodes ne sont pas entourées isolément par un cadre individuel. Chaque élément 10'A, 10'B comporte au contraire une enveloppe $E_v$ moulée directement sur l'ensemble des contours des électrodes 1'A, 2'A, ou 1'B, 2'B, et des séparateurs $S_e$, la matière moulée pouvant être par exemple une matière thermoplastique ou thermodurcissable. Cette technique de surmoulage peut avoir l'avantage de simplifier la réalisation des dispositifs conformes à l'invention tout en garantissant une bonne étanchéité.

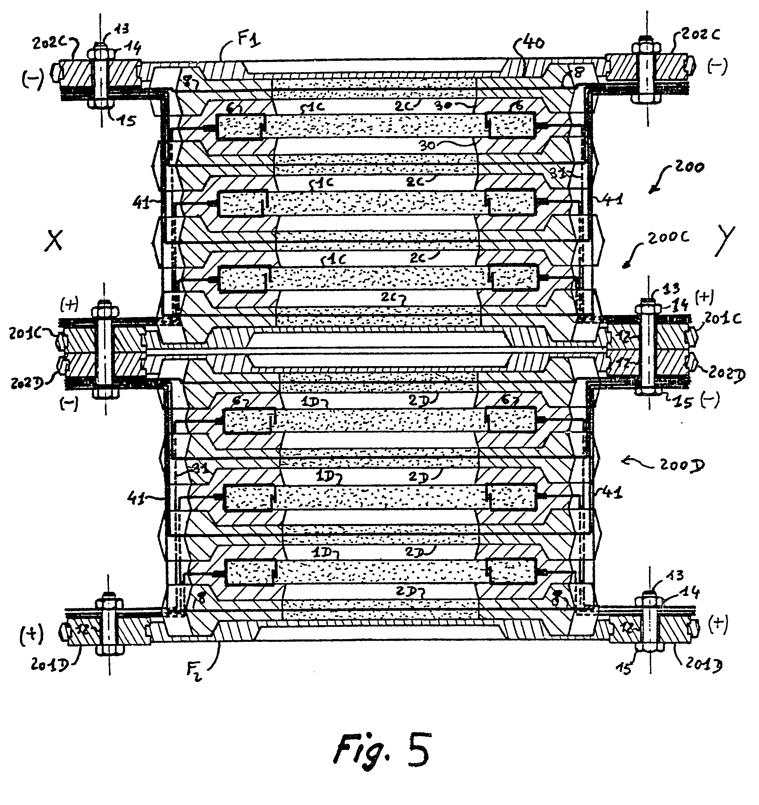

La figure 5 représente un autre dispositif 200 conforme à l'invention. Ce dispositif comporte deux éléments 200 C, 200 D. L'élément 200 C comporte trois électrodes positives 1 C et quatre électrodes négatives 2 C. De façon analogue, l'élément 200 D comporte trois électrodes positives 1 D et quatre électrodes négatives 2 D.

Ce dispositif 200 diffère du dispositif 10 en ce que chaque électrode positive 1 C, 1 D est reliée à deux sorties de courant 6 disposées sur deux côtés opposés, et en ce que chaque électrode négative 2 C, 2 D est reliée à deux sorties de courant 8 disposées également sur deux côtés opposés. Les sorties 6 et 8 sont par exemple identiques respectivement aux sorties 6 et 8 précédemment décrites et représentées à la figure 2, les électrodes 1 C, 1 D et les électrodes 2 C, 2 D étant respectivement des électrodes positives et négatives analogues aux électrodes précédemment décrites pour le dispositif 10.

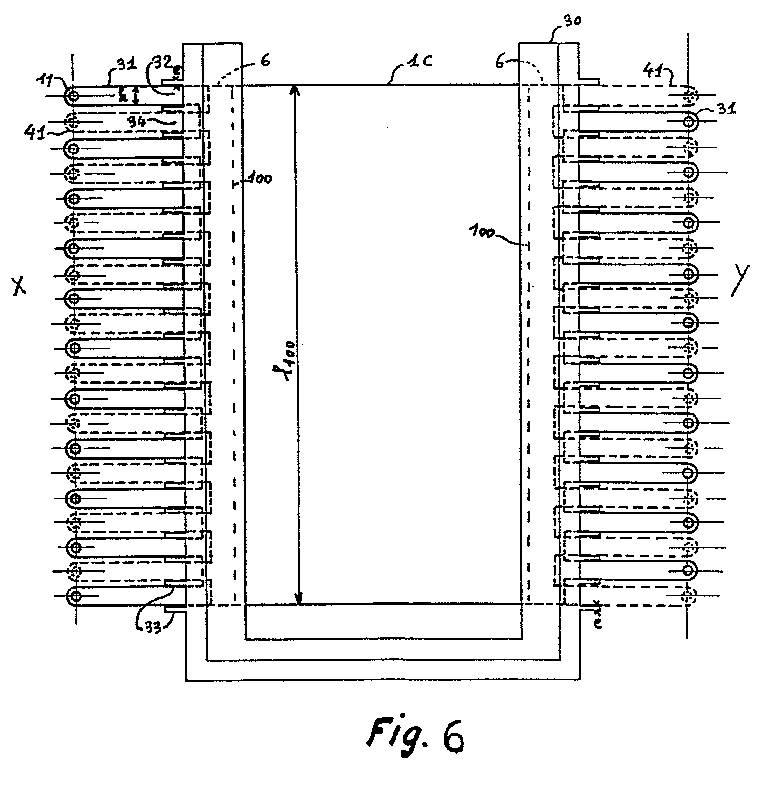

La figure 6 représente par exemple une électrode 1 C, avant montage dans le dispositif 200. Les sorties 6 relatives à cette électrode se prolongent à l'extérieur du cadre 30 entourant cette électrode par des lamelles 31 conductrices disposées de chaque côté du cadre 30, le sommet et la base du cadre 30 étant dépourvus de lamelles. Ces lamelles 31 sont obtenues par exemple en découpant une plaque métallique rectangulaire prolongeant chaque sortie 6. Chaque lamelle 31 est disposée dans une échancrure 32 du cadre 30, chaque échancrure étant limitée par deux protubérances 33 du cadre 30. Deux lamelles 31 successives sont séparées par une échancrure 34 vide, elle-même limitée par deux protubérances 33 du cadre 30. Le découpage des lamelles 31 s'effectue dans les parties des sorties 6 qui ne sont pas adjacentes à l'électrode 1 C.

A titre d'exemple, l'électrode positive 1 C, verticale, représentée à la figure 6 se prolonge par onze lamelles 31 d'un côté du dispositif 200, ce côté étant représenté par la lettre X, et par dix lamelles 31 sur le côté opposé du dispositif 200, ce côté opposé étant représenté par la lettre Y. Ces lamelles, avant assemblage, sont orientées horizontalement dans leur plus grande dimension, leur largeur ayant une orientation verticale. Chacune de ces lamelles comporte un trou 11 à son extrémité « libre » (non référencée) éloignée du cadre 30 (figure 6). Les lamelles 31 des électrodes 1 D ont une disposition analogue.

Chaque électrode négative 2 C, 2 D, verticale, se prolonge au contraire par dix lamelles du côté X et onze lamelles du côté Y. La figure 6 représente en pointillé les lamelles 41 correspondant à une électrode 2 C adjacente à l'électrode 1 C représentée sur cette figure.

Pour chaque électrode, l'ensemble des lamelles 31 ou 41 disposées sur un côté X ou Y constitue donc un prolongement de la sortie 6 ou 8 à laquelle elles correspondent, cet ensemble de lamelles et cette sortie étant obtenus à partir d'une feuille conductrice commune. Chaque lamelle 41 est disposée dans une échancrure du cadre 40 entourant cette électrode 2 C, chacune de ces échancrures étant limitée par deux protubérances. Ces échancrures et ces protubérances ne sont pas représentées à la figure 6 dans un but de simplification.

Les lamelles 41 sont situées à des niveaux intermédiaires par rapport aux lamelles 31, c'est-à-dire que ces lamelles 41 sont disposées dans des échancrures dont le niveau correspond aux échancrures vides 34.

L'assemblage est effectué de la façon suivante. Dans chaque élément 200 C, 200 D, les lamelles 31 des électrodes 1 C ou 1 D correspondant à un même côté X ou Y sont réunies électriquement entre elles et à une borne conductrice positive 201 C ou 201 D percée de trous 12. L'assemblage se fait en pliant au moins une partie des lamelles et en réunissant avec des vis 13 les lamelles 31 de même niveau entre elles et avec la borne positive correspondante 201 C ou 201 D grâce à la correspondance des trous 11, 12, le serrage étant effectué avec les écrous 14 et les têtes de vis 15 de façon analogue à ce qui a été décrit précédemment pour le dispositif 10. L'assemblage entre les lamelles 41 des électrodes 2 C ou 2 D correspondant à chaque élément 200 C, 200 D s'effectue de manière semblable, avec les bornes négatives 202 C, 202 D, sur les côtés opposés X, Y.

L'élément 200 C comporte donc de chaque côté X ou Y une borne positive 201 C et une borne négative 202 C, et l'élément 200 D comporte de chaque côté X ou Y une borne positive 201 D et une borne négative 202 D. Le fait que les lamelles 31 d'une part et 41 d'autre part soient alternées permet cette disposition par entrecroisement de lamelles 31, 41 et par passage de ces lamelles dans les échancrures vides correspondant aux électrodes de signe opposé. Les protubérances précédemment décrites permettent à la fois d'augmenter la rigidité des cadres 30, 40 et d'avoir un croisement facile des lamelles 31 d'une part et 41 d'autre part en évitant tout contact électrique aux endroits où des lamelles de polarités opposées se croisent.

L'épaisseur verticale de ces protubérances est choisie de façon à obtenir une largeur verticale c'est-à-dire une hauteur des lamelles 31, 41 qui soit suffisante de façon à garantir l'homogénéité de fonctionnement des électrodes.

A titre d'exemple, les caractéristiques dimensionnelles de l'électrode 1 C, des lamelles 31, et des protubérances 33 (figure 6) sont les suivantes :

— hauteur $l_{100}$ de l'électrode : 210 mm ;
— hauteur « h » de chaque lamelle : 8 mm ;
— épaisseur verticale « e » de chaque protubérance : 2 mm.

Sur la figure 6, la hauteur de l'ensemble des lamelles 31 est soit égale à $l_{100}$, du côté X, soit légèrement inférieure à $l_{100}$ du côté Y, la différence correspondant alors pratiquement à h + e pour la partie supérieure et h + e pour la partie inférieure, les lamelles 31 d'une part et 41 d'autre part étant réparties pratiquement sur toute la hauteur $l_{100}$, et ceci de façon régulière.

L'élément 200 C comporte donc quatre bornes en tout. De façon analogue l'élément 200 D comporte quatre bornes en tout. Les bornes 201 C et 202 D de signes opposés sont situées dans la partie centrale du dispositif 200, les bornes 202 C d'une part et 201 D d'autre part sont situées sur deux faces extrêmes opposées $F_1$, $F_2$ du dispositif 200, ces faces ayant une orientation pratiquement parallèle à celle des plaques 1 C, 1 D, 2 C, 2 D. Chaque borne 201 C de l'élément 200 C est réunie à la borne voisine 202 D de l'élément 200 D de façon analogue à ce qui a été décrit précédemment pour les bornes 101 A, 102 B du dispositif 10. Les éléments 200 C, 200 D sont ainsi reliés électriquement en série de chaque côté X, Y du dispositif 200, les bornes 202 C et 201 D étant les bornes respectivement négatives et positives de ce dispositif.

Il va de soi que les bornes 202 C peuvent être éventuellement réunies à une borne négative commune si on le désire, et que, de même, les bornes 201 D peuvent être éventuellement réunies à une borne positive commune, ces bornes n'étant pas représentées sur le dessin dans un but de simplification.

Le fait d'utiliser, dans le dispositif 200, des sorties de courant disposées de part et d'autre de chaque électrode améliore encore davantage l'homogénéité de fonctionnement de cette électrode dans une direction perpendiculaire à l'écoulement des charges. Cet avantage est obtenu pratiquement sans augmentation de la chute ohmique dans ces connexions.

La répartition des lamelles 31, 41 sur la hauteur de chaque côté des électrodes garantit l'homogénéité de fonctionnement en hauteur, c'est-à-dire que le drainage des charges électriques s'effectue de façon pratiquement homogène sur tout ce côté, comme dans les dispositifs précédemment décrits.

Il faut noter que les lamelles 31, 41 peuvent avoir éventuellement des longueurs variables pour une même plaque, les variations de longueur des lamelles pouvant être complémentaires pour deux plaques réunies électriquement et correspondant à deux éléments adjacents.

Les sorties 6, 8 pourraient éventuellement comporter des lamelles 31, 41, mais il est cependant préférable d'avoir des sorties continues, comme précédemment décrit.

Le nombre des lamelles 31, 41 cité précédemment n'a rien de limitatif, l'essentiel étant que ce nombre soit suffisant pour assurer un tel fonctionnement homogène sur les côtés.

Chacun des éléments 200 C, 200 D peut être muni d'une enveloppe surmoulée conformément à ce qui a été décrit précédemment pour le générateur 10'. Dans ce cas il peut être utile d'effectuer le surmoulage sur les lamelles 31 et 41 de telle sorte que la matière moulée enrobe les endroits où des lamelles 31, 41 s'entrecroisent, ce qui facilite l'isolement électrique aux points de croisement entre les lamelles de polarités opposées.

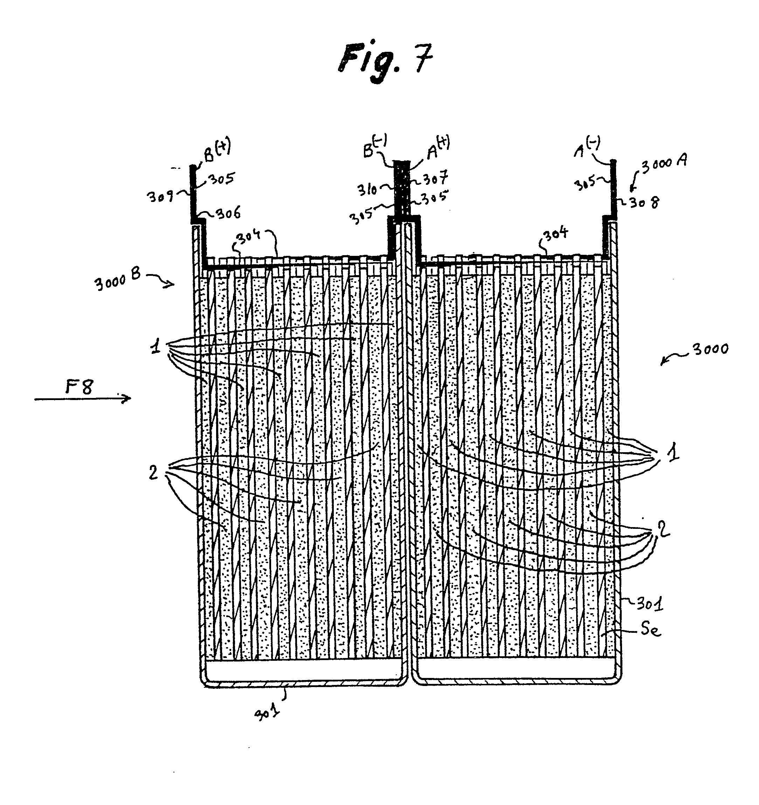

Les figures 7, 8, 9 représentent un autre dispositif conforme à l'invention. Ce dispositif 3 000 comporte deux éléments 3 000 A, 3 000 B. Chaque élément comporte un bac 301 contenant un électrolyte, non référencé sur le dessin.

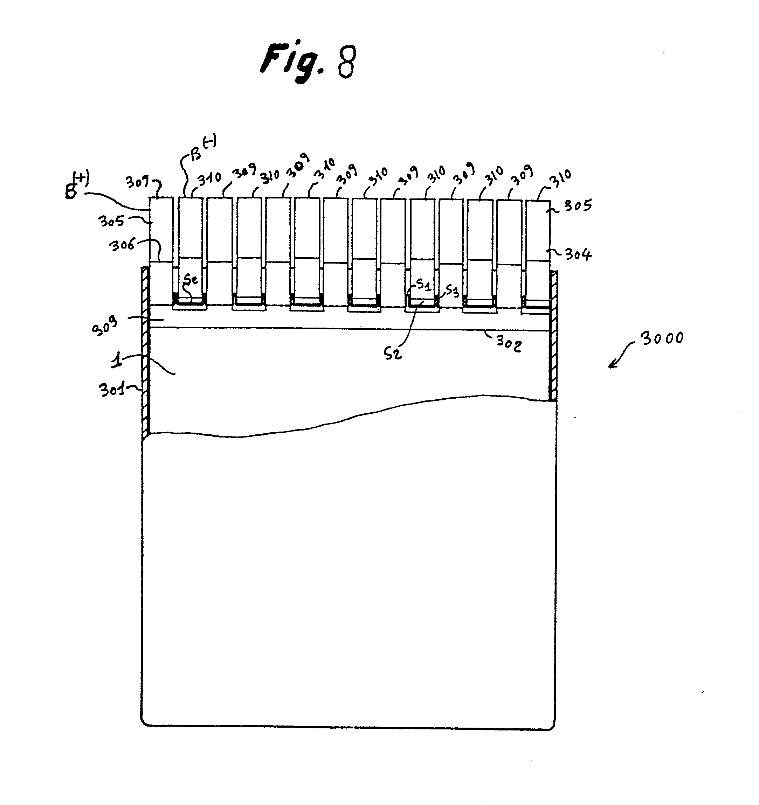

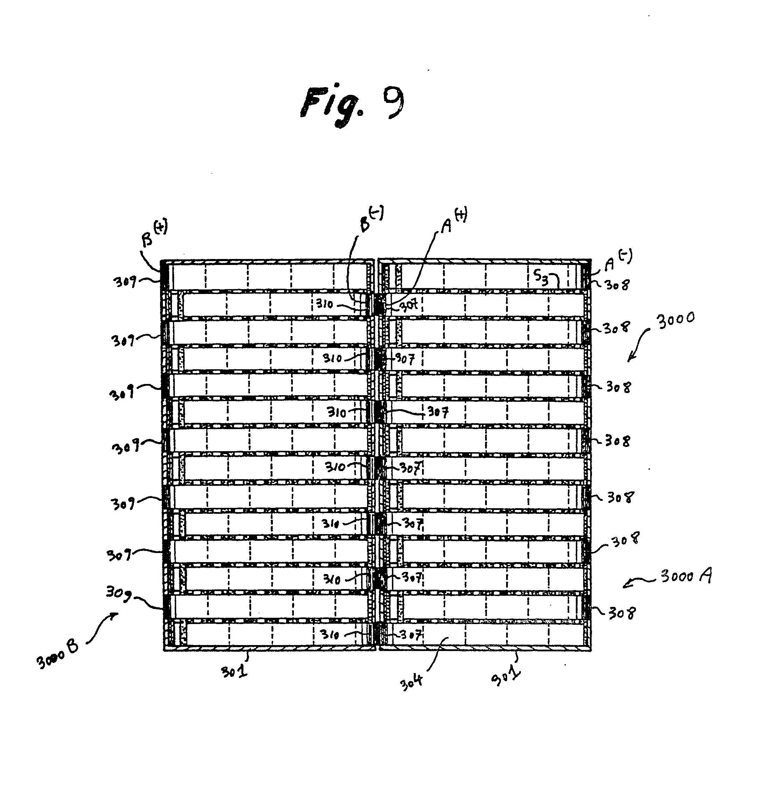

Dans chaque bac 301 sont logées six électrodes positives 1 et cinq électrodes négatives 2, sous forme de plaques, deux électrodes successives ayant des signes opposés et étant séparées par un séparateur $S_e$ (fig. 7). Chaque plaque 1, 2 est reliée, sur son côté supérieur 302 à une sortie de courant 303, la longueur de chaque sortie 303 étant pratiquement la même que celle du côté correspondant 302 (fig. 8). Ces longueurs ne sont pas référencées pour clarifier le dessin. Chaque sortie 303 se prolonge par sept lamelles 304. Dans chaque élément 3 000 A, 3 000 B, ces lamelles sont pliées et rabattues horizontalement. Ces lamelles 304 s'entrecroisent de façon analogue à ce qui a été décrit précédemment pour le dispositif 200. L'isolement électrique aux endroits où les lamelles de sens opposés se croisent peut être obtenu par exemple en utilisant des séparateurs $S_e$ dont le côté supérieur $S_1$ est situé à un niveau plus élevé que le côté supérieur 302 des électrodes, ce côté $S_1$ du séparateur comportant des échancrures $S_2$ pour le passage des lamellles 304 de telle sorte que chaque lamelle soit disposée dans des échancrures $S_2$ et que deux lamelles de sens opposés qui se croisent soient séparées par une protubérance $S_3$ du séparateur $S_e$ cette protubérance $S_3$ séparant deux échancrures $S_2$ (fig. 8, 9). Dans chaque élément les lamelles 304 de même polarité se superposent au-dessus des plaques (fig. 7, 9). Il va de soi que d'autres moyens d'isolement sont possibles, par exemple l'utilisation de vernis isolants. Ces moyens pouvant être combinés avec les protubérances $S_3$. Chaque lamelle 304 comporte une extrémité verticale 305 délimitée par exemple par un pli 306 de cette lamelle (fig. 7, 8).

L'élément 3 000 A comporte ainsi un ensemble $A^{(+)}$ de sept groupes 307 d'extrémités positives 305 et un groupe $A^{(-)}$ de sept groupes 308 d'extrémités négatives 305, chaque groupe 307, comportant six extrémités 305 et chaque groupe 308 comportant cinq extrémités 305. De façon analogue l'élément 3 000 B comporte un ensemble $B^{(+)}$ de sept groupes 309 d'extrémités positives 305 et un ensemble $B^{(-)}$ de sept groupes 310 d'extrémités négatives 305, chaque groupe 309 comportant six extrémités 305 et chaque groupe 310 comportant cinq extrémités 305. Les termes « extrémités positives », « extrémités négatives » veulent dire que les extrémités 305 correspondent soit à des plaques positives soit à des plaques négatives.

Dans chaque groupe 307 à 310, les extrémités 305 peuvent être reliées électriquement entre elles de façon connue, par exemple en les soudant.

Les éléments 3 000 A, 3 000 B sont reliés électriquement en série par les ensembles $A^{(+)}$, $B^{(-)}$, cette liaison pouvant par exemple se faire en soudant chaque groupe 307 avec un groupe 310, ces ensembles $A^{(+)}$, $B^{(-)}$ pouvant se juxtaposer. Les ensembles $A^{(-)}$, $B^{(+)}$, situés à des extrémités opposées du dispositif 3 000 constituent au moins en partie les bornes du dispositif 3 000.

Conformément à l'invention, chaque connexion électrique du dispositif 3 000 est délocalisée et répartie sur toute la longueur du côté 302 de l'électrode correspondante, quelle que soit l'électrode et quel que soit l'élément dans lequel elle se trouve, même si la série électrique du dispositif 3 000 comporte plus de deux éléments. La densité du courant le long de tout côté 302 est pratiquement uniforme, avec les avantages déjà décrits qui en découlent.

Les dispositifs 10, 200 ont été précédemment décrits comme des batteries alcalines du type Ni/Fe. Il va de soi que cet exemple n'a rien de limitatif. On peut envisager par exemple d'autres types de générateurs de courant électrique primaires ou secondaires dans lesquels la matière active positive ou négative peut être un métal, par exemple le plomb, le zinc, le cadmium, l'argent, le manganèse, l'aluminium, le magnésium, le cobalt, un métal alcalin ou alcalino-terreux. Cette matière active peut être aussi par exemple un oxyde ou un hydroxyde de ces métaux ou d'autres métaux, un sel, par exemple un halogénure ou un chalcogénure d'un métal de transition, ou un mélange de ces matières. L'électrolyte n'est pas nécessairement alcalin, il peut être neutre ou acide ; on peut même employer des électrolytes non aqueux, par exemple des électrolytes employant des solvants organiques ; ou même des électrolytes solides.

L'invention s'applique également aux piles à combustible, la matière active négative étant alors par exemple l'hydrogène ou un composé de l'hydrogène. L'invention s'applique aussi aux dispositifs électrolytiques absorbant du courant électrique.

## Revendications

1. Dispositif électrochimique comportant au moins deux éléments, chaque élément comportant au moins une électrode positive et au moins une électrode négative sous forme de plaques, dispositif dans lequel :

a) chaque plaque est reliée, sur au moins un côté, à une sortie de courant adjacente, elle-même reliée à un prolongement conducteur d'électrons ;

b) le prolongement correspondant à chaque plaque aboutit par son extrémité dite « libre » à une borne, dite « borne de l'élément », de même polarité que la plaque, ou constitue au moins en partie une telle borne par son extrémité « libre », chaque élément comportant ainsi au moins une borne positive et au moins une borne négative, ledit dispositif étant caractérisé en ce que :

c) chaque jonction électrique entre chaque plaque et la sortie adjacente s'effectue pratiquement sur tout le côté (c) correspondant de la plaque ;

d) chaque sortie (s) et le prolongement (p) correspondant forment un ensemble situé hors de la plaque ; la distance (d) entre les bords extrêmes de cet ensemble est pratiquement égale à la longueur du côté correspondant de cette plaque, depuis cette plaque jusqu'à l'extrémité « libre » (ep) du prolongement correspondant, ces bords extrêmes aboutissant à cette plaque ;

e) les deux éléments sont réunis en série électrique par au moins deux des bornes ($\alpha$, $\beta$) des éléments ; la jonction électrique entre ces deux bornes s'effectue pratiquement sur toute la ladite distance (d) entre bords extrêmes pour chaque prolongement qui aboutit à une de ces bornes ou qui constitue au moins en partie, par son extrémité « libre », une de ces bornes.

2. Dispositif électrochimique selon la revendication 1 caractérisé en ce que la jonction électrique entre chaque sortie (s) et le prolongement (p) adjacent s'effectue pratiquement sur toute la distance entre les bords extrêmes de l'ensemble qu'ils forment.

3. Dispositif selon l'une quelconque des revendications 1 ou 2 caractérisé en ce qu'au moins une sortie forme une feuille continue.

4. Dispositif selon la revendication 3 caractérisé en ce que la sortie (s) a une sorme rectangulaire.

5. Dispositif selon l'une quelconque des revendications 1 à 4 caractérisé en ce qu'au moins une plaque n'est reliée que sur un côté à une sortie de courant.

6. Dispositif selon la revendication 5 caractérisé en ce que, dans au moins un élément, au moins deux plaques successives ne sont reliées chacune qu'à une sortie de courant, ces sorties étant disposées dans deux sens opposés.

7. Dispositif selon l'une quelconque des revendications 1 à 6, caractérisé en ce qu'au moins une plaque est reliée à deux sorties de courant disposées sur deux côtés opposés.

8. Dispositif selon l'une quelconque des revendications 1 à 7, caractérisé en ce qu'au moins un prolongement (p) forme une feuille continue.

9. Dispositif selon l'une quelconque des revendications 1 à 8 caractérisé en ce qu'au moins un prolongement (p) est constitué de lamelles ou comporte des lamelles (31, 41).

10. Dispositif selon la revendication 9 caractérisé en ce que les lamelles sont réparties pratiquement sur toute la distance entre les bords extrêmes de l'ensemble correspondant.

11. Dispositif selon l'une quelconque des revendications 9 ou 10 caractérisé en ce que, dans au moins un élément, au moins deux lamelles de signes opposés se croisent, le dispositif comportant des moyens pour éviter tout contact électrique aux endroits où les lamelles se croisent.

12. Dispositif selon l'une quelconque des revendications 1 à 11 caractérisé en ce qu'au moins une plaque est entourée par un cadre individuel (3, 4, 30, 40).

13. Dispositif selon la revendication 12 combinée à l'une quelconque des revendications 9 à 11 caractérisé en ce que chaque lamelle est disposée dans une échancrure du cadre correspondant (30, 40).

14. Dispositif selon l'une quelconque des revendications 12 ou 13 combinée à la revendication 11 caractérisé en ce que les moyens pour éviter tout contact électrique sont constitués au moins en partie par des protubérances (33) du cadre (30).

15. Dispositif selon la revendication 14, caractérisé en ce que deux lamelles successives correspondant à un même côté d'une électrode sont séparées par une échancrure vide (34) du cadre correspondant ; une ou plusieurs lamelles de singe opposé à ces deux lamelles successives passent dans cette échancrure vide, chaque échancrure étant limitée par deux protubérances du cadre.

16. Dispositif selon l'une quelconque des revendications 12, à 15, caractérisé en ce que le cadre est réalisé par moulage d'une matière sur les bords de l'électrode et de la ou des sorties de courant correspondantes.

17. Dispositif selon l'une quelconque des revendications 1 à 11, caractérisé en ce qu'au moins un élément comporte une enveloppe moulée directement sur l'ensemble des contours des plaques.

18. Dispositif selon la revendication 17 combinée à la revendication 11, caractérisé en ce que les moyens pour éviter tout contact électrique sont constitués au moins en partie par l'enveloppe.

19. Dispositif selon l'une quelconque des revendications 9 à 11, caractérisé en ce que chaque lamelle d'au moins un prolongement est disposée dans une échancrure ($S_2$) d'au moins un séparateur ($S_e$).

20. Dispositif selon la revendication 19 combinée à la revendication 11, caractérisé en ce que les moyens pour éviter tout contact électrique sont constitués au moins en partie par des protubérances ($S_3$) du séparateur ($S_e$).

21. Dispositif selon l'une quelconque des revendications 1 à 20, caractérisé en ce qu'au moins une sortie et le prolongement correspondant forment une feuille unique.

22. Dispositif selon l'une quelconque des revendications 1 à 21, caractérisé en ce qu'au moins une des sorties est reliée à un côté vertical d'une plaque.

23. Dispositif selon l'une quelconque des revendications 1 à 22, caractérisé en ce qu'au moins une sortie est reliée à un côté horizontal d'une plaque.

24. Dispositif selon l'une quelconque des revendications 1 à 23, caractérisé en ce qu'il est un générateur de courant électrique.

### Claims

1. An electrochemical device comprising at least two cells, each cell comprising at least one positive electrode and at least one negative electrode in the form of plates, device in which :

a) each plate is joined on at least one side to an adjacent current outlet which in turn is joined to an electron-conductive extension ;

b) the extension corresponding to each plate abuts at its so-called « free » end at a terminal, called the « cell terminal », of the same polarity as the plate, or, at least in part, constitutes such a terminal at its « free » end, each cell thus having at least one positive terminal and at least one negative terminal, the device being characterized by the fact that :

c) each electrical junction between each plate and the adjacent outlet is effected substantially over the entire corresponding side (c) of the plate ;

d) each outlet (s) and the corresponding extension (p) form an assembly located outside of the plate ; the distance (d) between the extreme edges of this assembly is substantially equal to the length of the corresponding side of said plate, from said plate up to the « free » end (ep) of the corresponding extension, these extreme edges abutting at said plate ;

e) the two cells are connected in electrical series by at least two terminals ($\alpha$, $\beta$) of the cells ; the electrical junction between these two terminals is effected substantially over said entire distance (d) between extreme edges in the case of each extension which abuts at one of these terminals or which, at least in part, constitutes by its « free » end one of these terminals.

2. An electrochemical device according to claim 1, characterized by the fact that the electrical junction between each outlet (s) and the adjacent extension (p) is effected substantially over the entire distance between the extreme edges of the assembly which they form.

3. An electrochemical device according to claim 1 or 2, characterized by the fact that at least one outlet forms a continuous sheet.

4. An electrochemical device according to claim 3, characterized by the fact that the outlet (s) is of rectangular shape.

5. An electrochemical device according to anyone of claims 1 to 4, characterized by the fact that at least one plate is connected only on one side to a current outlet.

6. An electrochemical device according to claim 5, characterized by the fact that in at least one cell at least two successive plates are each connected only to one current outlet, these outlets being arranged in two opposite directions.

7. An electrochemical device according to anyone of claims 1 to 6, characterized by the fact that at least one plate is connected to two current outlets arranged on two opposite sides.

8. An electrochemical device according to anyone of claims 1 to 7, characterized by the fact that at least one extension (p) forms a continuous sheet.

9. An electrochemical device according to anyone of claims 1 to 8, characterized by the fact that at least one extension (p) is formed of blades or has blades (31, 41).

10. An electrochemical device according to claim 9, characterized by the fact that the blades are distributed substantially over the entire distance between the extreme edges of the corresponding assembly.

11. An electrochemical device according to claim 9 or 10, characterized by the fact that, in at least one cell, at least two blades of opposite signs cross one another, the device having means for avoiding electrical contact at the places where the blades cross one another.

12. An electrochemical device according to anyone of claims 1 to 11, characterized by the fact that at least one plate is surrounded by an individual frame (3, 4, 30, 40).

13. An electrochemical device according to claim 12 combined with anyone of claims 9, 10, 11, characterized by the fact that each blade is arranged in a notch in the corresponding frame (30, 40).

14. An electrochemical device according to claim 12 or 13 combined with claim 11, characterized by the fact that the means for avoiding electrical contact consist, at least in part, of protuberances (33) on the frame (30).

15. An electrochemical device according to claim 14, characterized by the fact that two successive blades corresponding to a same side of an electrode are separated by a notch (34) of the corresponding frame ; one or more blades of a sign opposite to these two successive blades pass in this notch, each notch being limited by two protuberances of the frame.

16. An electrochemical device according to any one of claims 12 to 15, characterized by the fact that the frame is made by molding a material over the sides of the electrode and of the corresponding current outlet or outlets.

17. An electrochemical device according to anyone of claims 1 to 11, characterized by the fact that at least one cell has an envelope molded directly over the entire contours of the plates.

18. An electrochemical device according to claim 17 combined with claim 11, characterized by the fact that the means for avoiding electrical contact consist, at least in part, of said envelope.

19. An electrochemical device according to anyone of claims 9 to 11, characterized by the fact that each blade of at least one extension is arranged in a notch ($S_2$) in at least one separator ($S_e$).

20. An electrochemical device according to claim 19 combined with claim 11, characterized by the fact that the means for avoiding electrical contact consist, at least in part, of protuberances ($S_3$) of the separator ($S_e$).

21. An electrochemical device according to anyone of claims 1 to 20, characterized by the fact that at least one outlet and the corresponding extension form a single sheet.

22. An electrochemical device according to anyone of claims 1 to 21, characterized by the fact that at least one of the outlets is connected to a vertical side of a plate.

23. An electrochemical device according to anyone of claims 1 to 22, characterized by the fact that at least one outlet is connected to a horizontal side of a plate.

24. An electrochemical device according to anyone of claims 1 to 23, characterized by the fact that it is an electric current generator.

**Ansprüche**

1. Elektrochemische Vorrichtung mit wenigstens zwei Elementen, von denen jedes wenigstens eine positive und wenigstens eine negative Elektrode in Form von Platten umfaßt, wobei in dieser Vorrichtung :

a) jede Platte auf wenigstens einer Seite mit einem angrenzenden Stromausgang verbunden ist, der seinerseits mit einer elektronenleitenden Verlängerung verbunden ist ;

b) die jeder Platte entsprechende Verlängerung mit ihrem sogenannten « freien » Ende bis zu einer Klemme reicht, die als « Klemme des Elementes » bezeichnet wird und dieselbe Polarität wie die Platte aufweist, oder wenigstens teilweise durch ihr « freies » Ende eine solche Klemme bildet, wobei jedes Element auf diese Weise wenigstens eine positive Klemme und wenigstens eine negative Klemme umfaßt, wobei diese Vorrichtung dadurch gekennzeichnet ist, daß ;

c) jeder elektrische Anschluß zwischen jeder Platte und dem angrenzenden Ausgang praktisch über die gesamte entsprechende Seite (c) der Platte erfolgt ;

d) jeder Ausgang (s) und die entsprechende Verlängerung (p) eine außerhalb der Platte liegende Einheit bilden ; wobei der Abstand (d) zwischen den äußersten Rändern dieser Einheit praktisch gleich der Länge der entsprechenden Seite dieser Platte von dieser Platte bis zu dem « freien » Ende (ep) der entsprechenden Verlängerung ist, wobei diese äußersten Ränder sich bis zu dieser Platte erstrecken ;

e) die beiden Elemente sind über wenigstens zwei der Klemmen (α, β) der Elemente elektrisch in Reihe geschaltet ; für jede Verlängerung, die sich bis zu einer der Klemmen erstreckt oder die wenigstens teilweise an ihrem « freien » Ende eine dieser Klemmen bildet, erfolgt der elektrische Anschluß zwischen diesen beiden Klemmen praktisch über den gesamten gennanten Abstand (d) zwischen den äußersten Rändern.

2. Elektrochemische Vorrichtung nach Anspruch 1, dadurch gekennzeichnet, daß der elektrische Anschluß zwischen jedem Ausgang (s) und der angrenzenden Verlängerung (p) praktisch über den gesamten Abstand zwischen den äußersten Rändern der durch sie gebildeten Einheit erfolgt.

3. Vorrichtung nach Anspruch 1 oder 2, dadurch gekennzeichnet, daß wenigstens ein Ausgang eine durchgehende Folie bildet.

4. Vorrichtung nach Anspruch 3, dadurch gekennzeichnet, daß der Ausgang (s) eine rechtwinklige Form aufweist.

5. Vorrichtung nach einem der Ansprüche 1 bis 4, dadurch gekennzeichnet, daß wenigstens eine Platte nur auf einer Seite mit einem Stromausgang verbunden ist.

6. Vorrichtung nach Anspruch 5, dadurch gekennzeichnet, daß in wenigstens einem Element wenigstens zwei aufeinander folgende Platten jeweils nur mit einem Stromausgang verbunden sind, wobei diese Ausgänge in zwei entgegengesetzten Richtungen angeordnet sind.

7. Vorrichtung nach einem der Ansprüche 1 bis 6, dadurch gekennzeichnet, daß wenigstens eine Platte mit zwei Stromausgängen verbunden ist, welche auf den zwei einander gegenüberliegenden Seiten angeordnet sind.

8. Vorrichtung nach einem der Ansprüche 1 bis 7, dadurch gekennzeichnet, daß wenigstens eine Verlängerung (p) eine durchgehende Folie bildet.

9. Vorrichtung nach einem der Ansprüche 1 bis 8, dadurch gekennzeichnet, daß wenigstens eine Verlängerung (p) aus Lamellen gebildet ist oder Lamellen (31, 41) enthält.

10. Vorrichtung nach Anspruch 9, dadurch gekennzeichnet, daß die Lamellen praktisch über den gesamten Abstand zwischen den äußersten Rändern der entsprechenden Einheit verteilt sind.

11. Vorrichtung nach Anspruch 9 oder 10, dadurch gekennzeichnet, daß in wenigstens einem Element wenigstens zwei Lamellen entgegengesetzter Vorzeichen einander kreuzen, wobei die Vorrichtung Mittel umfaßt, um jeden elektrischen Kontakt an den Stellen zu vermeiden, wo die Lamellen einander kreuzen.

12. Vorrichtung nach einem der Ansprüche 1 bis 11, dadurch gekennzeichnet, daß wenigstens eine Platte von einem individuellen Rahmen (3, 4, 30, 40) umgeben ist.

13. Vorrichtung nach Anspruch 12 in Kombination mit einem der Ansprüche 9 bis 11, dadurch gekennzeichnet, daß jede Lamelle in einer Aussparung des entsprechenden Rahmens (30, 40) angeordnet ist.

14. Vorrichtung nach Anspruch 12 oder 13 in Kombination mit Anspruch 11, dadurch gekennzeichnet, daß die Mittel zum Verhindern jeglichen elektrischen Kontaktes wenigstens teilweise durch Vorsprünge (33) des Rahmens (30) gebildet sind.

15. Vorrichtung nach Anspruch 14, dadurch gekennzeichnet, daß zwei aufeinanderfolgende Lamellen, die derselben Seite einer Elektrode entsprechen, durch eine leere Aussparung (34) des entsprechenden Rahmens getrennt sind ; wobei eine oder mehrere Lamellen von entgegengesetztem Vorzeichen wie diese zwei aufeinanderfolgenden Lamellen in diese leere Aussparung hineinreichen und jede Aussparung durch zwei Vorsprünge des Rahmens begrenzt ist.

16. Vorrichtung nach einem der Ansprüche 12 bis 15, dadurch gekennzeichnet, daß der Rahmen durch Abformen eines Werkstoffes an den Rändern der Elektrode und des entsprechenden bzw. der entsprechenden Stromausgänge gebildet ist.

17. Vorrichtung nach einem der Ansprüche 1 bis 11, dadurch gekennzeichnet, daß wenigstens ein Element eine Hülle umfaßt, die direkt um die Gesamtheit der Konturen der Platten herumgeformt ist.

18. Vorrichtung nach Anspruch 17 in Kombination mit Anspruch 11, dadurch gekennzeichnet, daß die Mittel zum Verhindern jeglichen elektrischen Kontaktes wenigstens teilweise durch die Hülle gebildet sind.

19. Vorrichtung nach einem der Ansprüche 9 bis 11, dadurch gekennzeichnet, daß jede Lamelle wenigstens einer Verlängerung in einer Aussparung $(S_2)$ wenigstens eines Trennelementes $(S_e)$ angeordnet ist.

20. Vorrichtung nach Anspruch 19 in Kombination mit Anspruch 11, dadurch gekennzeichnet, daß die Mittel zum Verhindern jeglichen elektrischen Kontaktes wenigstens teilweise durch Vorsprünge $(S_3)$ des Trennelementes $(S_e)$ gebildet sind.

21. Vorrichtung nach einem der Ansprüche 1 bis 20, dadurch gekennzeichnet, daß wenigstens ein Ausgang und die entsprechende Verlängerung eine einzige Folie bilden.

22. Vorrichtung nach einem der Ansprüche 1 bis 21, dadurch gekennzeichnet, daß wenigstens einer der Ausgänge mit einer sekrechten Seite einer Platte verbunden ist.

23. Vorrichtung nach einem der Ansprüche 1 bis 22, dadurch gekennzeichnet, daß wenigstens ein Ausgang mit einer waagrechten Seite einer Platte verbunden ist.

24. Vorrichtung nach einem der Ansprüche 1 bis 23, dadurch gekennzeichnet, daß sie ein elektrischer Stromgenerator ist.

Fig·1

Fig. 2

Fig. 3

# Fig. 4

Fig. 5

**Fig. 6**

# Fig. 7

# Fig. 8

# Fig. 9